# EUROPEAN PATENT APPLICATION

(11) **EP 3 637 440 A1**
(43) Date of publication of application: **15.04.2020**
(21) Application number: 19202394.3
(22) Date of filing: 10.10.2019
(51) Int. Cl.: H01B 11/00, H01B 13/00, H01B 7/38

(54) **AUTOMOTIVE COMMUNICATIONS CABLE**

(30) Priority: 11.10.2018 US 201862744582 P
(71) Applicant: Aptiv Technologies Limited, 14004 St. Michael (BB)
(72) Inventor: BAUER, Lee, Troy, MI Michigan 48098 (US); BORNEMANN, Martin, 90489 Nürnberg (DE); SCHÄFER, Christian, 44879 Bochum (DE)
(74) Representative: Conroy, John

(57) **Abstract**

An example communications cable includes a core carrier disposed within a cable jacket. A pair of twisted conductors are partially disposed within the core carrier. A portion of the core carrier separates a first conductor in the pair of twisted conductors from a second conductor in the pair of twisted conductors.

## Description

### TECHNICAL FIELD

This specification relates to automotive communications cables.

### BACKGROUND

Modern vehicles have dozens of electronic control units (ECUs) that obtain sensor data, process the sensor data to generate output signals, and provide the output signals to particular vehicle components that perform actions based on the output signals. For example, a transmission control unit can obtain engine speed data, vehicle speed data, and throttle position data and generate an output signal that defines a desired gear for a vehicle. If the vehicle is not in the desired gear, the transmission can shift to the desired gear in response to the output signal.

Semi-autonomous and autonomous vehicles generally have an even greater number of ECUs than human-operated vehicles because sensor inputs replace some or all human inputs, and those additional sensor inputs must be processed. Moreover, semi-autonomous and autonomous vehicles often include redundant systems in order to satisfy safety requirements.

Generally, each ECU in a vehicle is connected to a central communications network over which the ECUs can exchange data with each other, with external sensors, and with other components of the vehicle. The central communications network includes a number of communications cables that are costly to manufacture and add significant weight to the vehicle. The communications cables in vehicles are generally jacketed unshielded twisted pairs (JUPTs).

### SUMMARY

This specification describes an improved communications cable. The communications cable includes a core carrier disposed within a cable jacket. A pair of twisted conductors are partially disposed within the core carrier. A portion of the core carrier separates a first conductor in the pair of twisted conductors from a second conductor in the pair of twisted conductors.

The subject matter described in this specification can be implemented in particular embodiments so as to realize one or more of the following advantages. First, the communications cable weighs less than a conventional JUPT of the same wire gauge because the communications cable has a single core carrier rather than one insulator per conductor. This lack of insulators directly reduces the weight of the communications cable. Indirectly, the lack of insulators allows the cable jacket to have a smaller diameter, which also reduces the weight of the communications cable.

The communications cable is also cheaper and easier to manufacturer than a conventional JUPT of the same wire gauge because manufacturing the communications cable requires fewer extrusions and does not require winding or decoiling. More specifically, the core carrier is extruded once, and the cable jacket is extruded once. The conductors are merely clicked into partial outer tubes in the core carrier. Because the conductors do not have their own insulators, the manufacturing process requires at least one fewer extrusion.

The communications cable also has less intrinsic impedance than a conventional JUPT because its lack of insulators results in conductors that are closer together. Similarly, the relative permittivity of the core carrier can be adjusted to alter the wave impedance of the communications cable, which provides flexibility in designing the communications cable.

Finally, because the conductors are only partially disposed within the core carrier, only a single stripping process is required to expose the conductors. That is, only the cable jacket must be stripped away, instead of both a cable jacket and an insulator as in a conventional JUPT. This makes it easier to attach the communications cable to a connector or to a component of a vehicle.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A is a diagram of a cross-section of a conventional JUPT, according to an embodiment.
FIG. 1B is a diagram of a cross-section of an improved communications cable, according to an embodiment.
FIG. 2 is a diagram of a side view of the improved communications cable, according to an embodiment.
FIG. 3A is a flow chart of an example process for stripping the improved communications cable, according to an embodiment.
FIG. 3B is a diagram of a cross-section of a stripped version of the improved communications cable, according to an embodiment.
FIG. 4 is a flow chart of an example process for manufacturing the improved communications cable, according to an embodiment.

Like reference numbers and designations in the various drawings indicate like elements.

### DETAILED DESCRIPTION

Reference will now be made in detail to embodiments, examples of which are illustrated in the accompanying drawings. In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the disclosed embodiments.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship or association between or among two or more other schematic elements, the absence of any such connecting elements is not meant to imply that no connection, relationship or association can exist. In other words, some connections, relationships or associations between elements are not shown in the drawings so as not to obscure the disclosure. In addition, for ease of illustration, a single connecting element is used to represent multiple connections, relationships or associations between elements. For example, where a connecting element represents a communication of signals, data or instructions, it should be understood by those skilled in the art that such element represents one or multiple signal paths (e.g., a bus), as may be needed, to affect the communication.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in the specification.

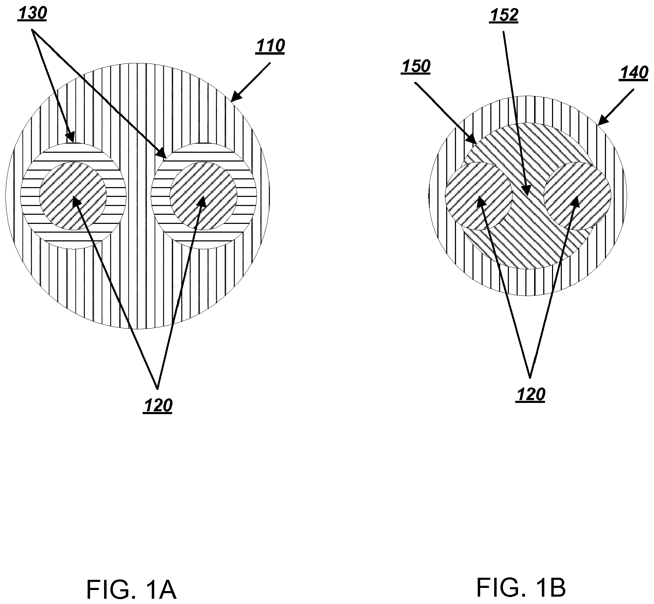

FIG. 1A is a diagram of a cross-section of a conventional JUPT. The conventional JUPT has a cable jacket 110. Two conductors 120, each surrounded by insulators 130, are disposed within the cable jacket 110.

FIG. 1B is a diagram of a cross-section of an improved communications cable. The communications cable includes a cable jacket 140, a core carrier 150, and two conductors 120 that are identical to the conductors 120 in FIG. 1A.

The cable jacket 140 provides mechanical support to the communications cable and electrically insulates the conductors 120 from the environment. The cable jacket 140 is generally a hollow cylinder and can be made of any appropriate electrical insulator, e.g., any appropriate plastic or rubber material that has enough flexibility to allow insertion into a vehicle.

The core carrier 150 is fully disposed within the cable jacket 140. The core carrier 150 has a generally cylindrical shape, but includes two partial outer tubes that are configured to hold the conductors 120. The partial outer tubes are generally cylindrical in shape in order to hold cylindrical conductors. The core carrier 150 can be made of polytetrafluorothylene (PTFE), fluorinated ethylene propylene (FEP), or any other suitable material. The specific composition of the core carrier 150 can be adjusted to achieve a desired relative permittivity of the communications cable.

The conductors 120 are each partially disposed within the core carrier 150. That is, the core carrier 150 does not completely surround the conductors 120. Instead, a portion of each conductor is in direct contact with the cable jacket 140. A central portion 152 of the core carrier 150 separates the conductors 120 from each other. In some implementations, the conductors 120 are approximately 0.2 mm apart, which is less than the conductors in the conventional JUPT. The conductors in the conventional JUPT are, at minimum, two times the thickness of the insulator 130 apart. The conductors 120 in the improved communications cable do not have this same constraint since neither has its own insulator.

Although the conductors 120 are only partially disposed within the core carrier 150, they are fully disposed within the cable jacket 140. The cable jacket 140 provides sufficient electrical insulation for the conductors 120.

The conductors 120 can be any appropriate electrical conductors. For example, the conductors 120 can be copper litz wire, which is made of wound strands of copper wire. Alternatively, the conductors 120 can be solid conductors, e.g., single pieces of copper.

In some implementations, the communications cable includes multiple pairs of conductors partially disposed within the core carrier 150. In such implementations, the core carrier 150 has additional partial outer tubes that are configured hold the multiple pairs of conductors.

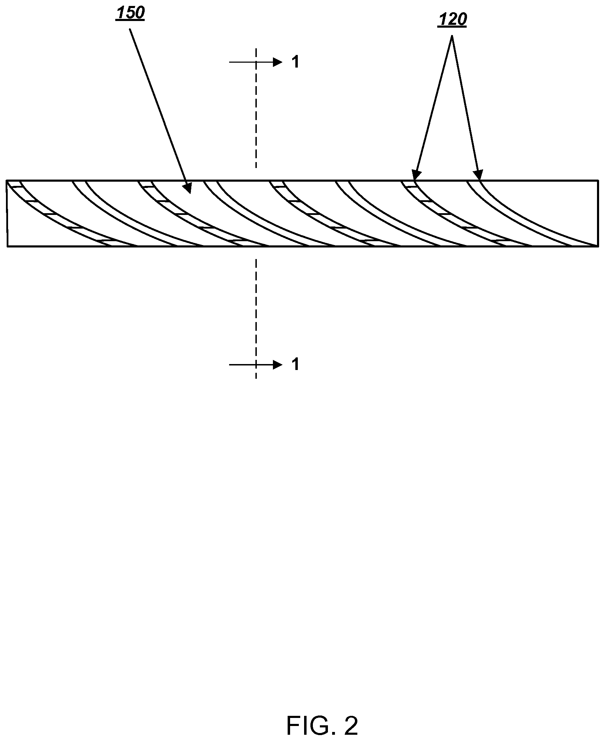

FIG. 2 is a diagram of a side view of the improved communications cable described in reference to FIG. 1B. FIG. 2 depicts the communications cable without the cable jacket 140.

From this side view, the twisted nature of the two conductors 120 is evident. Twisting the conductors 120 reduces the amount of electromagnetic radiation that the communications cable generates and improves rejection of external electromagnetic interference.

In some implementations, the conductors 120 are untwisted. In such implementations, the partial outer tubes of the core carrier 150 run parallel to each other on opposite sides of the core carrier 150 along the entire length of the communications cable.

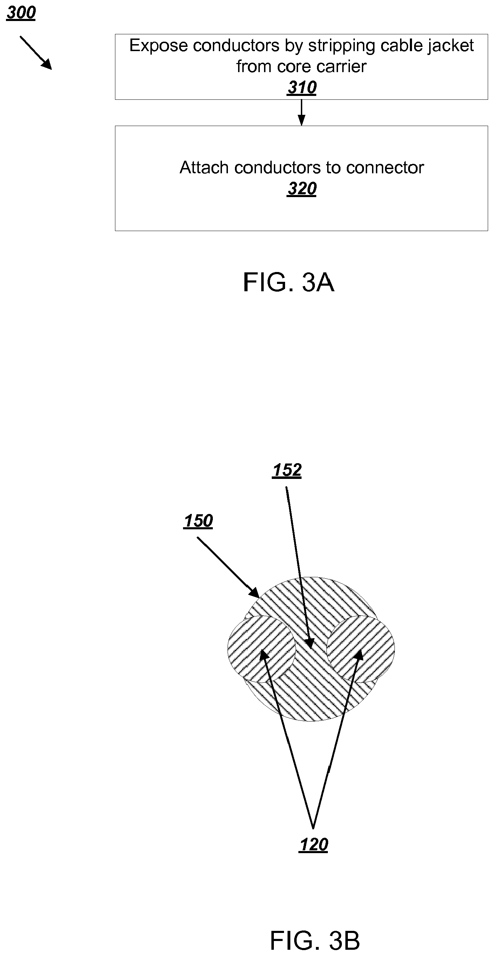

FIG. 3A is a flow chart of an example process 300 for stripping the improved communications cable described in reference to FIG. 1B. The process can be performed by a person or by an automated machine that is configured to do so. For convenience, the process will be described as being performed by a person.

Using conventional wire strippers, a person exposes the conductors by stripping the cable jacket from the core carrier (310). Because the conductors are only partially disposed within the core carrier, a single stripping process exposes the conductors. That is not the case in the conventional JUPT, in which each conductor additionally has its own insulator that must be separately stripped. FIG. 3B is a diagram of a cross-section of a stripped version of the improved communications cable described in reference to FIG. 1B. Because the conductors are only partially disposed within the core carrier, the conductors protrude slightly from the communications cable after a person strips away the cable jacket. This makes the conductors more easily accessible.

The person attaches the exposed conductors to a connector, e.g., by crimping, laser welding, or soldering the conductors to the connector (320). This is possible because the core carrier holds the conductors in place relative to each other. In contrast, after a person strips a conventional JUPT, the conductors are able to move relative to each other, which makes the above-mentioned attachment methods more difficult. Additionally, the core carrier maintains the twist in the communications cable for the entire length of the cable. This increases noise immunity.

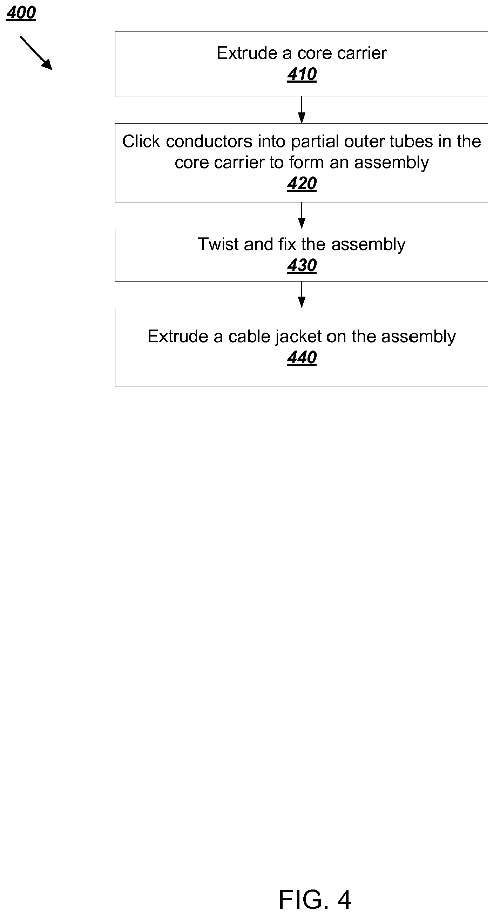

FIG. 4 is a flow chart of an example process 400 for manufacturing the improved communications cable described in reference to FIG. 1B. For convenience, the process will be described as being performed by an automated system of one or more machines and one or more computers.

The system extrudes a core carrier (410). The extruded core carrier includes the partial outer tubes described in reference to FIG. 1.

The system clicks, snaps, or inserts each of a first conductor and a second conductor into the partial outer tubes to form an assembly (420).

The system twists the assembly while it is still hot from the extrusion process and then fixes the assembly in the twisted position (430). Fixing the assembly can involve cooling the assembly.

Finally, the system extrudes the cable jacket on the assembly (440).

The process 400 requires fewer extrusions than the manufacturing process for a conventional JUPT because the manufacturing process for the conventional JUPT includes extruding insulators on each conductor. The improved communications cable does not have separate insulators for each conductor but instead a core carrier with partial outer tubes into which the conductors must merely be clicked, which further simplifies the manufacturing process.

While this document contains many specific implementation details, the implementation details should not be construed as limitations on the scope of what may be claimed but rather as a description of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can, in some cases, be excised from the combination, and the claimed combination may be directed to a sub combination or variation of a sub combination.

While logic flows or operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various software components in the embodiments described above should not be understood as requiring such separation in all embodiments, and it should be understood that the described software components can generally be integrated together in a single software program or multiple software programs.

In some instances, functions in claims will be preceded with the phrase "one or more." The phrase "one or more" as used herein includes a function being performed by one element, a function being performed by more than one element, e.g., in a distributed fashion, several functions being performed by one element, several functions being performed by several elements, or any combination of the above.

In some instances, claim elements will be preceded with the terms first, second, third and so forth. It should be understood that, although the terms first, second, third, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context."

Some aspects of the subject matter of this specification may include gathering and use of data available from various sources. The present disclosure contemplates that in some instances, this gathered data may identify a particular location or an address based on device usage. Such personal information data can include location-based data, addresses, subscriber account identifiers, or other identifying information. The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure.

### Embodiments

Although the present invention is defined in the attached claims, it should be understood that the present invention can also (alternatively) be defined in accordance with the following embodiments:
1. A communications cable, comprising: a cable jacket;
   a core carrier disposed within the cable jacket; and
   a pair of twisted conductors partially disposed within the core carrier, wherein a portion of the core carrier separates a first conductor in the pair of twisted conductors from a second conductor in the pair of twisted conductors.
2. The communications cable of embodiment 1, wherein the pair of twisted conductors is fully disposed within the cable jacket.
3. The communications cable of embodiment 1, wherein the core carrier comprises first and second partial outer tubes that are configured to hold the first conductor and the second conductor.
4. The communications cable of embodiment 1, wherein the first conductor and the second conductor each lack their own insulator.
5. The communications cable of embodiment 1, wherein the first conductor and the second conductor are litz wire.
6. The communications cable of embodiment 1, wherein a distance between the first conductor and the second conductor is approximately 0.2 millimeters.
7. The communications cable of embodiment 1, wherein the cable jacket is an electrical insulator.
8. The communications cable of embodiment 1, wherein the core carrier comprises polytetrafluorothylene.
9. The communications cable of embodiment 1, further comprising:
   a second pair of twisted conductors partially disposed within the core carrier.
10. A method for attaching a communications cable to a connector, the communications cable comprising:
   a cable jacket,
   a core carrier disposed within the cable jacket, and
   a pair of twisted conductors partially disposed within the core carrier, wherein a portion of the core carrier separates a first conductor in the pair of twisted conductors from a second conductor in the pair of twisted conductors,
   the method comprising:
      exposing the pair of twisted conductors by stripping the cable jacket; and attaching the exposed pair of twisted conductors to the connector.
11. The method of embodiment 10, wherein attaching comprises crimping.
12. The method of embodiment 10, wherein attaching comprises laser welding.
13. A method for manufacturing a communications cable, the communications cable comprising:
   a cable jacket,
   a core carrier disposed within the cable jacket, wherein the core carrier comprises first and second partial outer tubes, and
   a pair of twisted conductors partially disposed within the core carrier, wherein a portion of the core carrier separates a first conductor in the pair of twisted conductors from a second conductor in the pair of twisted conductors,
   the method comprising:
      extruding the core carrier;
      clicking the first conductor and the second conductor into the first partial outer tube and the second partial outer tube of the core carrier to form an assembly; twisting and fixing the assembly; and
      extruding the cable jacket on the twisted assembly.

## Claims

1. A communications cable, comprising:
a cable jacket;
a core carrier disposed within the cable jacket; and
a pair of twisted conductors partially disposed within the core carrier, wherein a portion of the core carrier separates a first conductor in the pair of twisted conductors from a second conductor in the pair of twisted conductors.

2. The communications cable of claim 1, wherein the pair of twisted conductors is fully disposed within the cable jacket.

3. The communications cable of claim 1, wherein the core carrier comprises first and second partial outer tubes that are configured to hold the first conductor and the second conductor.

4. The communications cable of claim 1, wherein the first conductor and the second conductor each lack their own insulator.

5. The communications cable of claim 1, wherein the first conductor and the second conductor are litz wire.

6. The communications cable of claim 1, wherein a distance between the first conductor and the second conductor is approximately 0.2 millimeters.

7. The communications cable of claim 1, wherein the cable jacket is an electrical insulator.

8. The communications cable of claim 1, wherein the core carrier comprises polytetrafluorothylene.

9. The communications cable of claim 1, further comprising:
a second pair of twisted conductors partially disposed within the core carrier.

10. A method for attaching a communications cable according to claim 1 to a connector, the method comprising:
exposing the pair of twisted conductors by stripping the cable jacket; and
attaching the exposed pair of twisted conductors to the connector.

11. The method of claim 10, wherein attaching comprises crimping.

12. The method of claim 10, wherein attaching comprises laser welding.

13. A method for manufacturing a communications cable according to claim 1, wherein the core carrier comprises first and second partial outer tubes, the method comprising:
extruding the core carrier;
clicking the first conductor and the second conductor into the first partial outer tube and
the second partial outer tube of the core carrier to form an assembly;
twisting and fixing the assembly; and
extruding the cable jacket on the twisted assembly.
